# EUROPEAN PATENT SPECIFICATION

(11) **EP 0 557 120 B1**
(45) Date of publication and mention of the grant of the patent: **12.06.1996**
(21) Application number: 93301232.0
(22) Date of filing: 19.02.1993
(51) Int. Cl.: C08F 2/00, C08G 12/06, C08F 14/06, C08G 73/02, C07C 251/22

(54) **Polymer scale preventive agent**
Polymerbelagerungsinhibitor
Agent prévenant l'encroûtage par des polymères

(30) Priority: 20.02.1992 JP 70300/92
(43) Date of publication of application: 25.08.1993
(73) Proprietor: SHIN-ETSU CHEMICAL CO., LTD., Chiyoda-ku Tokyo (JP)
(72) Inventor: Shimizu, Toshihide, Urayasu-shi, Chiba-ken (JP); Watanabe, Mikio, Kashima-gun, Ibaraki-ken (JP)
(74) Representative: Votier, Sidney David

(56) References cited:
- FR-A- 2 383 199
- US-A- 4 517 344
- JOURNAL OF APPLIED POL. SCI. vol. 42, 1991, US pages 2893 - 2897 and pages 2899 - 2901, V. S. NITHIANANDAM et al.

## Description

### BACKGROUND OF THE INVENTION

### Field of the Invention

The present invention relates to a process for the polymerization of a monomer having an ethylenically unsaturated double bond.

### Description of the Prior Art

Hitherto, as processes of polymerizing a monomer having an ethylenically unsaturated double bond, for example, the suspension polymerization, the emulsion polymerization, the solution polymerization, the gas phase polymerization, and the bulk polymerization are known. In any of these processes, polymer scale is apt to be deposited at parts where the monomer comes in contact, for example, on the inner wall surface of a polymerization vessel and an agitator.

If polymer scale is deposited, for example, the yield of the polymer drops, the capacity for cooling the polymerization vessel decreases, and further the polymer scale is peeled off and is mixed with the polymer, thereby disadvantageously degrading the item that is obtained by molding the polymer. In addition, to remove the deposited polymer scale, not only are too much labor and time required but also since the polymer scale contains unreacted monomer, there is a danger that the human body will be injured by that monomer, which has become quite a serious problem in recent years.

Concerning prevention of deposition of polymer scale on the polymerization vessel inner wall surface and the like as mentioned above, conventionally, a method wherein a polymer scale preventive agent comprising a polar organic compound such as an amine compound, a quinone compound, and an aldehyde compound is applied and a method wherein such a polar organic compound is added to an aqueous medium are known (Japanese Patent Publication (kokoku) No. 45-30343 (1970)), which are used, for example, in some cases of suspension polymerization of vinyl chloride.

However, although these methods exhibit an effect of preventing polymer scale from being deposited until the polymerization is repeated to the extent of about 5 to 6 batches, when the polymerization is repeated further, the preventive effect declines (i.e., the preventive effect is poor in durability), which is a disadvantage. In this regard, the influence is particularly serious where an water-soluble catalyst is used, and these methods are not satisfactory from an industrial point of view.

In order to overcome this disadvantage, Japanese Pre-examination Patent Publication (kokai) No.60-30681 (1985) suggests the use of a condensation product of an aromatic amine compound an an aromatic nitro compound as a polymer scale preventive agent. If a coating film containing this condensation product of an aromatic amine compound and an aromatic nitro compound is formed on the part where a monomer comes in contact such as the polymerization vessel inner wall surface or the like, polymer scale is not deposited on the liquid phase part in the polymerization vessel even if the polymerization is repeated to the extent of 100 to 200 batches. Further, even in the case where a water-soluble catalyst is used, similarly polymer scale is prevented from being deposited on the liquid phase part.

However, there is a defect that polymer scale being deposited near the interface between the gas phase part and the liquid phase part positioned at the upper part in the polymerisation vessel.

Once polymer scale is deposited near the interface between the gas phase part and the liquid phase part, along with the repetition of the polymerization the deposited polymer scale gradually grows, ultimately leading to peeling-off of the polymer scale, which mixes into the polymer in some cases. If the polymer scale thus mixes into the polymer, where the polymer is worked into a molded item such as a sheet, many fish eyes occur in the obtained molded item, thereby degrading the molded item conspicuously.

If the polymer obtained by the polymerization is worked into a molded item such as a sheet, high whiteness is required for the obtained molded item. That is, if a polymer is molded into a sheet or the like without adding any colorant, the obtained molded item may be colored more or less. This coloring is called initial coloration, which is desirably minimized as far as possible. However, in some cases, the coating film made of the above condensation product of an aromatic amine compound and an aromatic nitro compound is peeled off or dissolves and mixes into the polymer, and therefore the whiteness of the molded item lowers, that is, the initial coloration is degraded.

Specification FR-A-2383199 discloses the polymerisation of vinyl halides in reactors whose surfaces have been coated with, for example, the reaction products of monomeric amines and quinones. According to US-A-4,517,344 acrylates or methacrylates are polymerised in vessels coated with compounds formed by reacting an aromatic quinone and an aromatic diamine. Quinone-amine polymers and their syntheses are described in J. App. Polymer Science, Vol. 42 (1991), at pages 2893-2897 and 2899-2901.

### SUMMARY OF THE INVENTION

An object of the present invention is to provide a process for polymerizing a monomer having an ethylenically unsaturated double bond using a polymer scale preventive agent which can effectively prevent polymer scale from being deposited not only on the liquid phase part in a polymerization vessel but also even near the interface between the liquid phase part and the gas phase part in the polymerization vessel, and can produce a polymer which can be molded into a sheet or the like having relatively few fish eyes and being low in initial coloration.

The present invention provides a process of producing a polymer by polymerization of a monomer having an ethylenically unsaturated double bond in a polymerization vessel, which comprises the step of carrying out the polymerization in a polymerization vessel having, on the inner wall surface, a coating film which has been formed by applying a coating liquid to said inner wall surface and then drying the same, said coating liquid comprising an aqueous alkaline solution with a pH of 8.0 to 13.0 containing, as a solvent, water or a mixed solvent of water and an organic solvent, in an amount of 30% by weight or less, miscible with water and containing a condensation product of
(A) at least one aliphatic diamine compound selected from the group consisting of methylenediamine, ethylenediamine, trimethylenediamine, 2,3-diaminobutane and 2,4-diaminopentane, with
(B) at least one quinone compound selected from the group consisting of compounds represented by the following formulae (1) to (4): 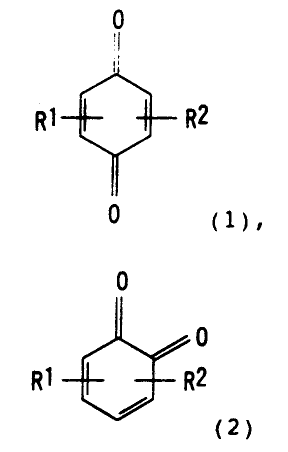 wherein in the formulae (1) and (2) R¹ represents -H, -NH₂, -C1, -Br, -OH, -NO₂, -COCH₃, -OCH₃, -N(CH₃)₂ or an alkyl group having 1 to 3 carbon atoms, and R² represents -H, -NH₂, -OH, -CH₃, -COOH or -SO₃H, 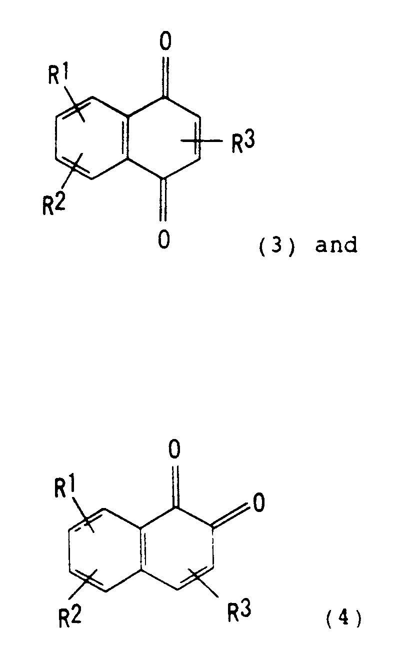 wherein in the formulae (3) and (4) R¹ and R² have the same meanings as defined above and R³ represents -H, -OH, -CH₃, -C1, -Br, -COCH₃, -OCH₃, COOH or -SO₃H.

According to the present invention, polymer scale can be prevented effectively from being deposited not only on the liquid phase part in a polymerisation vessel but also near the interface between the gas part and the liquid phase part in the polymerization vessel.

Therefore, where polymerization is carried out in accordance with the present invention, the removal operation of polymer scale is not required each time after the polymerization and therefore the productivity can be improved.

Where the polymer obtained by the polymerization of the present invention is molded into a sheet or the like, a molded item with relatively few fish eyes can be obtained.

Further, the thus obtained molded item is low in initial coloration. Specifically, the luminosity index (L value) obtained by the Hunter's color difference formula described in JIS Z 8730 (1980) is, for example, 70 or more in the case of a vinyl chloride polymer and 80 or more in the case of SBR.

### DETAILED DESCRIPTION OF PREFERRED EMBODIMENTS

The condensation product which is an essential component of the polymer scale preventive agent used in the process of the invention is a compound obtained by condensing the aliphatic diamine compound (A) and the quinone compound (B).

Now, the raw materials and the synthesis will be described.

### (A) Aliphatic diamine compounds

The aliphatic diamine compound (A) is at least one of the following, namely methylenediamine, ethylenediamine, trimethylenediamine, 2,3-diaminobutane and 2,4-diaminopentane.

The above aliphatic diamine compounds can be used singly or as a mixture of two or more.

### (B) Quinone compounds

The quinone compound (B) is a compound represented by one of the following formulae (1) to (4) : 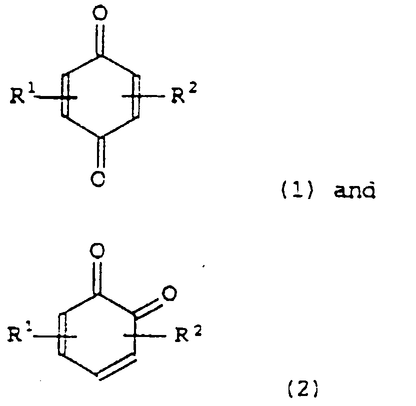
wherein R¹ represents -H, -NH₂, -Cl, -Br, -OH, -NO₂, -COCH₃, -OCH₃, -N(CH₃)₂ or an alkyl group having 1 to 3 carbon atoms and R² represents -H, -NH₂, -OH, -CH₃, -COOH, or -SO₃H.

Specific examples include o-, , and p-benzoquinone, hydroxy-p-benzoquinone, chloro-p-benzoquinone, bromo-p-benzoquinone, duroquinone, and chloranil. Among these, preferable ones are the o-benzoquinone, p-benzoquinone, hydroxy-p-benzoquione, and duroquinone. 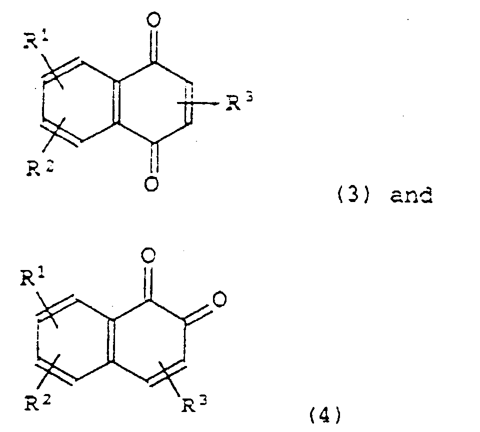
wherein R¹ and R² have the same meanings as defined above and R³ represents -H, -OH, -CH₃, -Cl, -Br, -COCH₃, -OCH₃, -COOH or -SO₃H.

Specific examples include 6-methyl-1,4-naphthoquinone, 2-methyl-1,4-naphthoquinone, lawsone, juglone, plumbagin, α-naphthoquinone, and β-naphthoquinone. Among these, preferable ones are the lawsone, juglone, plumbagin, and α-naphthoquinone.

The above quinone compounds can be used singly or as a mixture of two or more.

### Condensation reaction

The condensation product of the aliphatic diamine compound (A) and the quinone compound (B) which is an active ingredient of the present polymer scale preventive agent can be produced by reacting the component (A) and the component (B) in an organic solvent-based medium optionally in the presence of a catalyst generally at room temperature to 200°C for 0.5 to 100 hours.

The pH of the organic solvent-based medium in which the above reaction is carried out is generally in the range of 1 to 13. A pH adjustor can be used without any particular restrictions.

As the medium for the condensation reaction, an organic solvent-based medium is used. Herein the term "an organic solvent-based medium" means an organic solvent and a mixed solvent of an organic solvent with water (the content of water is 30 % by weight or less). The organic solvent includes alcohols such as methanol, ethanol, and propanol; ketones such as acetone and methyl ethyl ketone; and esters such as methyl acetate and ethyl acetate. Among them, preferable ones are the alcohols.

The quinone compound (B) acts also as a condensation catalyst and therefore generally it is not required to add other condensation catalyst particularly. If other condensation catalyst is added, examples of the condensation catalyst that can be used include an oxyacid and oxyacid salts such as iodic acid, periodic acid, potassium periodate, sodium perchlorate, a peroxide such as hydrogen peroxide, sodium peroxide, potassium persulfate, and ammonium persulfate; a halogen such as iodine, bromine, and chlorine; a metal salt such as ferrous chloride, ferric chloride, copper sulfate, and cuprous chloride; an organic peroxide such as benzoyl peroxide, peracetic acid, cumene hydroperoxide, perbenzoic acid, and p-methane hydroperoxide; an azo compound such as α,α'-azobisisobutyronitrile, and α,α'-azobis-2,4-dimethylvaleronitrile; and an aromatic nitro compound such as nitrobenzene, o-, m-, and p-hydroxynitrobenzene, o-, m-, p-nitroanisol, o-, m-, and p-chloronitrobenzene, o-, m-, and p-nitrobenzoic acid, and o-, m-, and p-nitrobenzenesulfonic acid.

Although the ratio of the aliphatic diamine compound (B) to the the quinone compound (B) for the condensation reaction is affected, for example, by the kinds of the aliphatic diamine compound, the quinone compound, and the solvent, the reaction temperature, and the reaction time that will be used, generally 0.01 to 15 parts by weight, preferably 0.05 to 3.0 parts by weight, of the quinone compound (B) are used per part by weight of the aliphatic diamine compound (A). If the amount of the quinone compound (B) is too much or too small, the polymer scale preventive effect of the obtained condensation product lowers.

By forming a coating film of the present polymer scale preventive agent containing the above condensation product as an essential component, for example, on a polymerization vessel inner wall surface, polymer scale can be prevented from being deposited on the polymerization vessel inner wall surface. Generally, in the case where the above coating film is formed on a polymerization vessel inner wall surface or the like, the polymer scale preventive agent is used in the state of a solution or a dispersion, that is, in the form of a coating liquid.

### Preparation of a coating liquid

The coating liquid as mentioned above may be prepared, for example, by adding, to the condensation product-containing solution produced by the above condensation reaction, the below-mentioned solvent as required. Alternatively, after the solvent in the above condensation product-containing solution is removed, the condensation product is ground and the below-mentioned solvent is added thereto, or after the condensation product-containing solution is charged into cold water to separate the condensation product, the separated condensation product is filtered and dried and the below-mentioned solvent is added thereto to prepare the desired coating liquid.

The solvent that is used for the preparation of the coating liquid is water or a mixed solvent of water and an organic solvent miscible with water. Organic solvents miscible with water include, for example, an alcohol solvent such as methanol, ethanol, and propanol; a ketone solvent such as acetone and methyl ethyl ketone; and an ester solvent such as methyl acetate and ethyl acetate. The organic solvent that will be used in the mixed solvent made up of an organic solvent miscible with water and water is used in such an amount that it will not lead to a risk of catching fire, explosion, and the like and will not cause a safety problem including toxicity in handling.
Specifically, that organic solvent is used in an amount of 30 % by weight or less.

The pH of the coating liquid is 8.0 to 13.0. Any pH adjustor can be used without any particular restrictions, and use is made, for example, of an acid compound such as phosphoric acid, perchloric acid, sulfuric acid, hydrochloric acid, nitric acid, phytic acid, acetic acid, p-toluenesulfonic acid, and tannic acid and an alkali compound, e.g., an alkali metal compound and an ammonium compound such as LiOH, KOH, NaOH, Na₂CO₃, Na₂SiO₃, Na₂HPO₄, and NH₄OH as well as an organic amine compound such as ethylenediamine, tetramethylenediamine, ethanolamine, diethanolamine, triethanolamine, guanidine, diethylenediamine, and triethylenetetramine.

The concentration of the condensation product of the component (A) and the component (B) in the coating liquid is not particularly restricted so long as the below-mentioned total coating amount is secured, but the concentration is generally about 0.001 to 15 % by weight, preferably 0.01 to 1 % by weight.

To the coating liquid, for example, a cationic surface active agent, a nonionic surface active agent, an anionic surface active agent, and the like can be added so long as the polymer scale preventive action is not impaired. Also optionally, a water-soluble polymer compound can be added such as a hydroxyl group-containing polymer compound, a cationic polymer compound, an anionic polymer compound, and an amphoteric polymer compound.

Examples of the hydroxyl group-containing polymer compound include starches and their derivatives such as amylose, amylopectin, dextrins, oxidized starches, acetyl starches, nitro starches, methyl starches, and carboxymethyl starches; hydroxyl group-containing mucilages such as pectic acid, protopectin, pectinic acid, alginic acid, laminarin, fucoidin, agar, and carrageenan; hydroxyl group-containing animal mucoids such as hyaluronic acid, chondroitin sulfuric acid, heparin, keratosulfonic acid, chitin, chitosan, charonin sulfuric acid, and limacoitin sulfuric acid; nucleic acids such as ribonucleic acid and deoxyribonucleic acid; cellulose derivatives such as methyl cellulose, ethyl cellulose, carboxymethyl cellulose, glycol cellulose, benzyl cellulose, cyanoethyl cellulose, methylene ether of cellulose, triphenyl methyl cellulose, formyl cellulose, cellulose acetate, cellulose propionate, cellulose butyrate, cellulose acetate propionate, cellulose sulfonate, cellulose carbamate, nitrocellulose, cellulose phosphate, and cellulose xanthogenate; hemicelluloses such as xylan, mannan, arabogalactan, galactan, and araban; lignins such as an alcohol lignin, dioxane lignin, phenol lignin, hydrotropic lignin, mercaptolignin, thioglycolic acid lignin, lignin sulfonic acid, alkali lignin, thio-alkali lignin, acid lignin, cuproxam lignin, and periodate lignin; phenol/formaldehyde resins; partially saponified polyvinyl alcohols, and completely saponified polyvinyl alcohols.

Examples of the cationic polymer compound include cationic polymer electrolytes that have positively charged nitrogen atoms in the side chains such as polyvinylamines, polyethyleneamines, polyethyleneimines, polyacrylamides, N-vinyl-2-pyrrolidone/acrylamide copolymers, cyclized polymers of dimethyldiamylammonium chloride, cyclized polymers of dimethyldiethylammonium bromide, cyclized polymers of diallyamine hydrochloride, cyclized copolymers of dimethyldiallyammonium chloride and sulfur dioxide, polyvinyl pyridines, polyvinyl pyrrolidones, polyvinyl carbazoles, polyvinyl imidazolines, polydimethylaminoethyl acrylates, polydimethylaminoethyl methacrylates, polydiethylaminoethyl acrylates, and polydiethylaiminoethyl methacrylates.

Examples of the anionic polymer compound include sulfomethylated polyacrylamides; polyacrylic acids; alginic acid, acrylamide/vinylsulfonic acid copolymers, polymethacrylates, and polystylenesulfonic acids, and their alkali metal salts and ammonium salts; and anionic polymer compounds that have carboxyl groups or sulfonic acid groups in the side chains such as carboxymethyl cellulose.

Examples of the amphoteric polymer compound include amphoteric polymer compounds such as glues, gelatins, caseins, and albumins.

To the coating liquid, optionally an inorganic compound can suitably be added so long as it does not impair the polymer scale preventive action. Examples of the inorganic compound that can be added include silicic acids and silicates such as orthosilicic acid, metasilicic acid, mesodisilicic acid, mesotrisilicic acid, mesotetrasilicic acid, sodium metasilicate, sodium orthosilicate, sodium disilicate, sodium tetrasilicate, and water glasses; metal salts such as oxyacid salts, acetates, nitrates, hydroxides, and halides of a metal such as an alkaline earth metal, for example, magnesium, calcium, and barium, a zinc family metal, for example, zinc, an aluminum family metal, for example, aluminum, and a platinum family metal, for example, platinum; and inorganic colloids such as ferric hydroxide colloid, colloidal silica, barium sulfate colloid, and aluminum hydroxide colloid. These inorganic colloids may be prepared by mechanical grinding, irradiation with ultrasonic waves, electrical dispersion, or chemical means.

### Formation of a coating film

To form a coating film on a polymerization vessel inner wall surface using the coating liquid prepared in the above manner, the coating liquid is applied on the polymerization vessel inner wall surface, then is dried sufficiently at a temperature in the range, for example, of room temperature to 100°C, and is optionally washed with water.

Preferably the coating liquid is applied not only on a polymerization vessel inner wall surface but also on other parts with which a monomer comes in contact during the polymerization. Such other parts include agitating blades, an agitating shaft, baffles, a condenser, a header, a search coil, bolts, and nuts.

More preferably, it is recommended that the coating liquid is applied on, in addition to the parts where a monomer comes in contact, parts where polymer scale is likely deposited, for example, the inner surfaces of equipments and pipelines of a recovery system of unreacted monomer. Specific examples are the inner surfaces of a monomer distillation column, a condenser, a monomer storing tank, and valves.

The method of applying the coating liquid to the polymerization vessel inner wall surface is not particularly restricted and the application can be carried out, for example, by brushing, by spraying, or by filling the polymerization vessel with the coating liquid and then withdrawing the coating liquid, and automatic coating methods described, for example, in Japanese Pre-examination Patent Publication (kokai) Nos. 57-61001 (1982) and 55-36288 (1980), Japanese Patent Publication (kohyo) Nos. 56-501116 (1981) and 56-501117 (1981), and Japanese Pre-examination Patent Publication (kokai) No. 59-11303 (1984) can be employed for the application as well.

The method of drying the wet surface formed by the application of the coating liquid is not particularly restricted and, for example, the following technique can be adopted: a method wherein after the application of the coating liquid, warm air having a suitable temperature is blown against the coated surface, or a method wherein the polymerization vessel inner wall surface and other surfaces where the coating liquid is to be applied are previously heated, for example, to 30 to 80°C and the coating liquid is directly applied to the heated surfaces. After the coated surfaces are dried, the coated surfaces are optionally washed with water.

The thus obtained coating film is generally in an amount of 0.001 to 5 g/m², particularly preferably 0.05 to 2 g/m², in terms of the total coating weight after the drying.

It is advisable that the above coating operation is carried out each time after the polymerization is carried out in 1 to 10 and several batches. Since the formed coating film is high in durability and the polymer scale preventive action lasts, it is not necessarily required to carry out the coating operation each time after the polymerization of 1 batch, and therefore the productivity is improved.

### Polymerization

After the coating is carried out in the above manner to form a coating film on the polymerization vessel inner wall and preferably on the other parts where a monomer comes in contact during the polymerization, the polymerization is carried out in the polymerization vessel in usual manner. That is, a monomer having an ethylenically unsaturated double bond, a polymerization initiator (catalyst), and optionally a polymerization medium such as water, a suspending agent, a solid dispersant, a dispersant such as a nonionic emulsifier and an anionic emulsifier, etc. are charged, and then the polymerization is carried out in usual manner.

The monomer having an ethylenically unsaturated double bond which will be polymerized by applying the present process includes, for example, a vinyl halide such as vinyl chloride; a vinyl ester such as vinyl acetate and vinyl propionate; acrylic acid and methacrylic acid and their esters and salts; maleic acid and fumaric acid and their esters and anhydrides; a diene monomer such as butadiene, chloroprene, and isoprene; styrene; α-methylstyrene; acrylonitrile; a vinylidene halide; and a vinyl ether, which may be used singly or as a mixture of two or more.

The type of polymerization to which the present process is applied is not particularly restricted and any polymerization type of suspension polymerization, emulsion polymerization, solution polymerization, bulk polymerization, and gas phase polymerization is effective, and particularly the present process is more suitable for polymerization in an aqueous medium such as suspension polymerization and emulsion polymerization.

Now, a general polymerization process will be described specifically with reference to examples of suspension polymerization and emulsion polymerization.

First, water and a dispersing agent are charged into a polymerization vessel and then a polymerization initiator is charged. Next, after the inside of the polymerization vessel is evacuated to bring the pressure therein to 0.1 to 760 mmHg, a monomer is charged (at that time, the pressure in the polymerization vessel will become generally 0.5 to 30 kgf/cm²·G), and the polymerization is carried out at a reaction temperature of 30 to 150°C. During the polymerization, if desired, one or two of water, a dispersing agent, and a polymerization initiator are added. The reaction temperature at the time of polymerization will vary depending on the type of monomer to be polymerized, for example, in the case of polymerization of vinyl chloride, the polymerization is carried out at 30 to 80°C, and in the case of styrene, the polymerization is carried out at 50 to 150°C. It is judged that the polymerization has been completed when the internal pressure of the polymerization vessel has lowered 0 to 7 kgf/cm²·G or the difference of the inlet temperature and the outlet temperature of the cooling water flowing into and out of the jacket provided around the polymerization vessel has become about zero (i.e., when the heat due to the polymerization reaction has not been generated). The amounts of the water, the dispersing agent, and the polymerization initiator to be charged at the time of the polymerization are generally 20 to 500 parts by weight, 0.01 to 30 parts by weight, and 0.01 to 5 parts by weight, respectively, per 100 parts by weight of the monomer.

In the case of solution polymerization, in place of water as a polymerization medium, an organic solvent such as toluene, xylene, and pyridine is used. A dispersing agent is optionally used. Other polymerization conditions are generally the same as those of suspension polymerization and emulsion polymerization.

Further, in the case of bulk polymerization, after the inside of a polymerization vessel is evacuated to bring the pressure to about 0.01 to 760 mmHg, a monomer and a polymerization initiator are charged into the polymerization vessel, and the polymerization is carried out at a reaction temperature of -10 to 250°C. For example, in the case of vinyl chloride, the polymerization is carried out at 30 to 80°C, and in the case of styrene, the polymerization is carried out at 50 to 150°C.

Where polymerization is carried out by applying the present method of preventing polymer scale from being deposited, polymer scale can be prevented from being deposited regardless of the material of the polymerization vessel inner wall surface and the like, and, for example, polymer scale can be prevented from being deposited even in the case where the polymerization is carried out in a polymerization vessel of a stainless steel or other steel or in a glass-lined polymerization vessel or the like.

Materials to be added to the polymerization system can be used without any particular restrictions. That is, the present process can effectively prevent polymer scale from being deposited even in a polymerization system where there are, for example, a polymerization initiator such as t-butyl peroxyneodecanoate, bis(2-ethylhexyl) peroxydicarbonate, 3,5,5-trimethylhexanoyl peroxide, α-cumyl peroxyneodecanoate, cumene hydroperoxide, cyclohexanone peroxide, t-butyl peroxypivalate, bis(2-ethoxyethyl) peroxydicarbonate, benzoyl peroxide, lauroyl peroxide, 2,4-dichlorobenzoyl peroxide, diisopropyl peroxydicarbonate, α,α'-azobisisobutyronitrile, α,α'-azobis-2,4-dimethylvaleronitrile, potassium peroxodisulfate, ammonium peroxodisulfate, and p-methane hydroperoxide; a suspending agent of a natural or synthetic polymer compound such as partially saponified polyvinyl alcohols, polyacrylic acids, copolymers of vinyl acetate with maleic anhydride, cellulose derivatives, e.g., hydroxypropyl methyl cellulose and gelatins; a solid dispersing agent such as calcium phosphate and hydroxy apatite; a nonionic emulsifier such as sorbitan monolaurate, sorbitan trioleate, and polyoxyethylene alkyl ethers; an anionic emulsifier such as sodium lauryl sulfate, sodium alkylbenzenesulfonates, e.g., sodium dodecylbenzenesulfonate, and sodium dioctylsulfosuccinate; a filler such as calcium carbonate and titanium oxide; a stabilizer such as tribasic lead sulfate, calcium stearate, dibutyl tin dilaurate, and dioctyl tin mercaptide; a lubricant such as rice wax, stearic acid, and cetyl alcohol; a plasticizer such as DDP and DBP; a chain transfer agent such as mercaptans, e.g., t-dodecyl mercaptan and trichloroethylene; and a pH adjustor.

In addition to the use of the present polymer scale preventive agent for forming a coating film on a polymerization vessel inner wall surface and the like, the polymer scale preventive agent may also be added to a polymerization system directly, whereby the polymer scale preventive effect can be improved. In this case, the amount of the polymer scale preventive agent to be added is suitably about 10 to 1,000 ppm based on the total amount of the monomers to be charged. In adding the polymer scale preventive agent, care should be taken so that the quality of the produced polymer including the fish eyes, the bulk specific gravity, and the particle size distribution may not be influenced.

### EXAMPLES

Now, the present invention will be described in detail with reference to Examples and Comparative Examples. In the following Tables, Experiment Nos. marked with * denote Comparative Examples and other Experiment Nos. denote Examples according to the present invention.

### Preparation Example 1

### Preparation of Condensation Product No. 1

990 g of methanol and 7 g of p-benzoquinone as the quinone compound (B) were charged into a reactor with a condenser and they were stirred at room temperature so that the p-benzoquinone might be dissolved in the methanol.

3 g of ethylenediamine as the aliphatic diamine compound (A) was added to the thus obtained methanol solution, the obtained reaction mixture solution was heated to 50°C, and the reaction was carried out at 50°C for 10 hours. Thus, Condensation Product No. 1 was obtained.

### Preparation of Condensation Product Nos. 2 to 12

In each preparation, the aliphatic diamine compound (A) and the quinone compound (B) shown in Table 1 and the solvent shown in Table 2 were used to prepare a condensation product in the same manner as in Example 1. Table 2 shows the total concentration of (A) + (B), the (A) : (B) ratio, the reaction temperature, and the reaction time in each preparation.

**Table 1**

| Condensation Product No. | Aliphatic diamine compound (A) | Quinone compound (B) |
|---|---|---|
| 1 | ethylenediamine | p-benzoquinone |
| 2* | | p-benzoquinone |
| 3* | ethylenediamine | |
| 4 | 2,3-diaminobutane | p-benzoquinone |
| 5 | methylenediamine | lawsone |
| 6 | ethylenediamine | juglone |
| 7 | ethylenediamine | α-naphthoquinone |
| 8 | ethylenediamine | plumbagin |
| 9 | ethylenediamine | duroquinone |
| 10* | octamethylenediamine | p-benzoquinone |
| 11* | heptamethylenediamine | 6-methyl-1,4-naphtoquinone |
| 12* | hexamethylenediamine | α-naphthoquinone |

**Table 2**

| Condensation Product No. | Total concentration of (A) + (B) (wt. %) | (A) : (B) (weight ratio) | Solvent (weight ratio) | Reaction temp. (°C) | Reaction time (hours) |
|---|---|---|---|---|---|
| 1 | 1.0 | 100 : 233 | methanol | 50 | 10 |
| 2* | 1.0 | - : 100 | methanol | 50 | 10 |
| 3* | 1.0 | 100 : - | methanol | 50 | 10 |
| 4 | 2.0 | 100 : 50 | methanol | 50 | 20 |
| 5 | 3.0 | 100 : 100 | methanol | 20 | 100 |
| 6 | 3.0 | 100 : 233 | methanol : water (80 : 20) | 50 | 20 |
| 7 | 4.0 | 100 : 300 | methanol | 75 | 10 |
| 8 | 1.0 | 100 : 100 | methanol | 130 | 3 |
| 9 | 1.0 | 100 : 100 | methanol | 50 | 5 |
| 10* | 1.0 | 100 : 100 | methanol : water (70 : 30) | 50 | 5 |
| 11* | 2.0 | 100 : 100 | methanol | 50 | 10 |
| 12* | 2.0 | 100 : 50 | methanol | 50 | 10 |

### Example 1 (Experiment Nos. 101 to 109 and Comparative Experiments 110 to 112)

Using a stainless steel polymerization vessel with an internal volume of 2,000 liters having an agitator, polymerization was carried out as follows.

In each experiment, the Condensation Product, the solvent, and the pH adjustor shown in Table 3 were used so that the conditions (the solvent composition, the concentration of the Condensation Product, and the pH) shown in Table 3 might be observed, thereby preparing a coating liquid. In each experiment, the coating liquid prepared in the above manner was applied to the inner wall of the polymerization vessel, the agitating shaft, the agitating blades, and other parts where a monomer would come in contact and was heated at 50°C for 15 min to be dried to form a coating film, and then the inside of the polymerization vessel was washed with water.

Thereafter, in each experiment, into the polymerization vessel having the coating film as formed in the above manner, 800 kg of water, 400 kg of vinyl chloride, 500 g of a partially saponified vinyl alcohol, 50 g of hydroxypropyl methyl cellulose, and 140 g of 3,5,5-trimethylhexanoyl peroxide were charged, and the polymerization was carried out at 66°C for 6 hours with stirring. After the completion of the polymerization, the produced polymer and unreacted monomer were recovered and the inside of the polymerization vessel was washed with water to remove residual resin.

A batch of the operations from the formation of the coating film through the polymerization to the washing of the inner wall of the polymerization vessel with water as carried out above was repeated ten times, and after the completion of the 10 batches of the operations, the amount of polymer scale deposited on the liquid phase part in the polymerization vessel and the amount of polymer scale deposited near the interface between the gas phase part and the liquid phase part were measured in each experiment by the method shown below. The results are shown in Table 4.

### Measurement of the amount of deposited polymer scale

Scale deposited on an area of 10 x 10 cm at a given part of the inner wall of the polymerization vessel was scraped off with a spatula and was weighed on a balance. The weighed value was multiplied by 100 to find the amount of the deposited polymer scale per square meter.

The number of fish eyes of a sheet molded from the polymer obtained in each experiment was measured by the method shown below. The results are shown in Table 4.

### Measurement of fish eyes

After a mixture prepared by blending 100 parts by weight of the obtained polymer, 50 parts by weight of dioctyl phthalate (DOP), 1 part by weight of dibutyl tin dilaurate, 1 part by weight of cetyl alcohol, 0.25 part by weight of titanium oxide, and 0.05 part by weight of carbon black was kneaded at 150°C for 7 min with 6-inch rolls, the mixture was molded into a sheet having a thickness of 0.2 mm, and the number of fish eyes in the obtained sheet per 100 cm² was investigated by optical transmission.

To evaluate the initial coloration in the case where the polymer obtained in each experiment was molded into a sheet, the luminosity index (L value) was measured by the method shown below. The results are shown in Table 4.

### Measurement of the luminosity index (L value)

After 100 parts by weight of the obtained polymer, 1 part by weight of a tin laurate stabilizer (TS-101 manufactured by Akishima Kagaku K.K.), 0.5 part by weight of a cadmium stabilizer (C-100J manufactured by Katsuta Kako K.K.), and 50 parts by weight of dioctyl phthalate as a plasticizer were kneaded with a two-roll mill at 160°C for 5 min, the mixture was molded into a sheet having a depth of 1 mm. The molded sheet was placed in a frame measuring 4 x 4 x 1.5 cm and was heated and pressure-molded at 160°C under 65 to 70 kgf/cm² for 0.2 hour to form a sample for measurement. With respect this sample, the luminosity index (L value) given by the Hunter's color difference formula described in JIS Z 8730 (1980) was determined and the evaluation was made in such a way that the greater the L value was, the higher the whiteness was, that is, the better the initial coloration was.

The L value was determined as follows:
In accordance with the description of JIS Z 8722, the stimulus value Y of the XYZ color system was determined by photoelectric tristimulus colorimetry using the standard illuminant C and a photoelectric colorimeter (colorimetry color difference meter model Z-1001 DP manufactured by Nihon Denshoku-kogyo K.K.). As the geometric conditions of illumination and light reception, the condition C described in JIS Z 8722, paragraph 4.3.1, was adopted. From the found stimulus value Y, the L value was calculated by using the formula L = 10Y^{1/2} described in JIS Z 8730 (1980).

**Table 3**

| Expt. No. | Coating liquid | | | | |
|---|---|---|---|---|---|
| | Condensation Product No. | Concentration (wt. %) | pH adjustor | pH | Solvent (weight ratio) |
| 101 | 1 | 0.3 | NaOH | 11.0 | water : methanol (90 : 10) |
| 102* | 2 | 0.3 | NaOH | 11.0 | water : methanol (90 : 10) |
| 103* | 3 | 0.3 | NaOH | 11.0 | water : methanol (90 : 10) |
| 104 | 4 | 0.3 | KOH | 11.0 | water : methanol (90 : 10) |
| 105 | 5 | 0.2 | ethylenediamine | 12.0 | water : methanol (90 : 10) |
| 106 | 6 | 0.1 | KOH | 12.0 | water : methanol (90 : 10) |
| 107 | 7 | 0.5 | Na₂CO₃ | 11.0 | water : methanol (90 : 10) |
| 108 | 8 | 0.3 | KOH | 10.0 | water : methanol (90 : 10) |
| 109 | 9 | 0.3 | NaOH | 10.0 | water : methanol (90 : 10) |
| 110* | 10 | 0.3 | NaOH | 10.0 | water : methanol (90 : 10) |
| 111* | 11 | 0.3 | NaOH | 11.0 | water : methanol (90 : 10) |
| 112* | 12 | 0.3 | NaOH | 11.0 | water : methanol (90 : 10) |

**Table 4**

| Expt. No. | Results after 10th batch polymerization run | | | |
|---|---|---|---|---|
| | Amount of deposited scale (g/m²) | | Fish eyes (number) | Luminosity index (L value) |
| | Liquid phase part | Near the interface of gas phase part/liquid phase part | | |
| 101 | 0 | 12 | 3 | 72.7 |
| 102* | 150 | 1,600 | 44 | 72.8 |
| 103* | 90 | 950 | 39 | 72.4 |
| 104 | 0 | 15 | 3 | 72.7 |
| 105 | 0 | 18 | 5 | 72.6 |
| 106 | 0 | 14 | 3 | 72.8 |
| 107 | 0 | 17 | 4 | 72.6 |
| 108 | 0 | 17 | 4 | 72.7 |
| 109 | 0 | 15 | 4 | 72.7 |
| 110* | 3 | 42 | 13 | 72.7 |
| 111* | 2 | 35 | 13 | 72.6 |
| 112* | 5 | 51 | 17 | 72.7 |

### Example 2 (Experiment Nos. 201 to 209)

Using a stainless steel polymerization vessel with an internal volume of 20 liters having an agitator, polymerization was carried out as follows.

In each experiment, the Condensation Product, the solvent, and the pH adjustor shown in Table 5 were used so that the conditions (the solvent composition, the concentration of the Condensation Product, and the pH) shown in Table 5 might be observed, thereby preparing a coating liquid. The coating liquid prepared was applied to the inner wall of the polymerization vessel, the agitating shaft, the agitating blades, and other parts where a monomer would come in contact and was heated at 50°C for 15 min to be dried to form a coating film, and then the inside of the polymerization vessel was washed with water.

Thereafter, in each experiment, into the polymerization vessel having the coating film as formed in the above manner, 9 kg of water, 225 g of sodium dodecyl benzene sulfonate, 12 g of t-dodecyl mercaptan, and 13 g of potassium peroxodisulfate were charged. After the inner atmosphere of the polymerization vessel was replaced with nitrogen gas, 1.3 kg of styrene and 3.8 kg of butadiene were charged thereinto, and the polymerization was carried out at 50°C for 20 hours. After the completion of the polymerization, the produced polymer and unreacted monomer were recovered and the inside of the polymerization vessel was washed with water to remove residual resin.

A batch of the operations from the formation of the coating film through the polymerization to the washing of the inner wall of the polymerization vessel with water as carried out above was repeated, and after the completion of the 10 batches of the operations, the amount of polymer scale deposited on the liquid phase part in the polymerization vessel and the amount of polymer scale deposited near the interface between the gas phase part and the liquid phase part were measured in each experiment in the same way as in Example 1. The results are shown in Table 6.

To evaluate the initial coloration in the case where the polymer obtained in each experiment was molded into a sheet, the luminosity index (L value) was measured by the method shown below. The results are shown in Table 6.

### Measurement of the luminosity index (L value)

1 kg of a 2 % magnesium sulfate solution was added to 1 kg of the obtained polymer latex so that the polymer might agglomerate and settle, and then the sediment formed was filtered. The filtered sediment was washed with hot water having a temperature of 80 to 90°C twice or thrice and then was dried in a vacuum dryer at 40°C for 25 hours to obtain a resin.

The resin was placed in a 9 x 9 cm frame having a depth of 0.1 cm, was heated at 195°C under 50 to 60 kgf/cm² for 0.2 hour, and was pressure-molded under a final pressure of 80 kgf/cm² to prepare a sample for measurement.

With respect to this sample, the luminosity index L was determined in the same way as in Example 1.

**Table 5**

| Expt. No. | Coating liquid | | | | |
|---|---|---|---|---|---|
| | Condensation Product No. | Concentration (wt. %) | pH adjustor | pH | solvent (weight ratio) |
| 201 | 1 | 0.3 | NaOH | 12.0 | water : methanol (80 : 20) |
| 202* | 2 | 0.3 | NaOH | 12.0 | water : methanol (80 : 20) |
| 203* | 3 | 0.3 | NaOH | 12.0 | water : methanol (80 : 20) |
| 204 | 4 | 0.3 | NaOH | 12.0 | water : methanol (80 : 20) |
| 205 | 5 | 0.3 | NaOH | 11.0 | water : methanol (80 : 20) |
| 206 | 6 | 0.3 | KOH | 11.0 | water : methanol (80 : 20) |
| 207 | 7 | 0.3 | KOH | 10.5 | water : methanol (80 : 20) |
| 208 | 8 | 0.3 | KOH | 11.0 | water : methanol (80 : 20) |
| 209 | 9 | 0.3 | KOH | 11.0 | water : methanol (80 : 20) |

**Table 6**

| Expt. No. | Results after 10th batch polymerization run | | |
|---|---|---|---|
| | Amount of deposited scale (g/m²) | | Luminosity index (L value) |
| | Liquid phase part | Near the interface of gas phase part/liquid phase part | |
| 201 | 0 | 17 | 85.6 |
| 202* | 120 | 1,300 | 85.8 |
| 203* | 78 | 750 | 85.6 |
| 204 | 0 | 23 | 85.6 |
| 205 | 0 | 18 | 85.6 |
| 206 | 0 | 59 | 85.6 |
| 207 | 0 | 41 | 85.5 |
| 208 | 0 | 26 | 85.5 |
| 209 | 0 | 38 | 85.6 |

## Claims

1. A process of producing a polymer by polymerization of a monomer having an ethylenically unsaturated double bond in a polymerization vessel, which comprises the step of carrying out the polymerization in a polymerization vessel having, on the inner wall surface, a coating film which has been formed by applying a coating liquid to said inner wall surface and then drying the same, said coating liquid comprising an aqueous alkaline solution with a pH of 8.0 to 13.0 containing, as a solvent, water or a mixed solvent of water and an organic solvent, in an amount of 30% by weight or less, miscible with water and containing a condensation product of
(A) at least one aliphatic diamine compound selected from the group consisting of methylenediamine, ethylenediamine, trimethylenediamine, 2,3-diaminobutane and 2,4-diaminopentane, with
(B) at least one quinone compound selected from the group consisting of compounds represented by the following formulae (1) to (4): 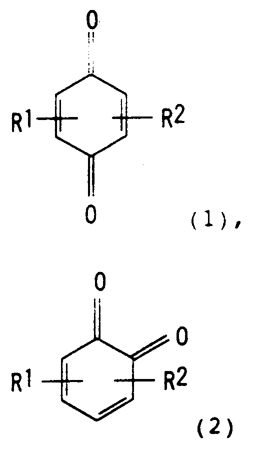 wherein in the formulae (1) and (2) R¹ represents -H, -NH₂, -C1, -Br, -OH, -NO₂, -COCH₃, -OCH₃, -N(CH₃)₂ or an alkyl group having 1 to 3 carbon atoms, and R² represents -H, -NH₂, -OH, -CH₃, -COOH or -SO₃H, 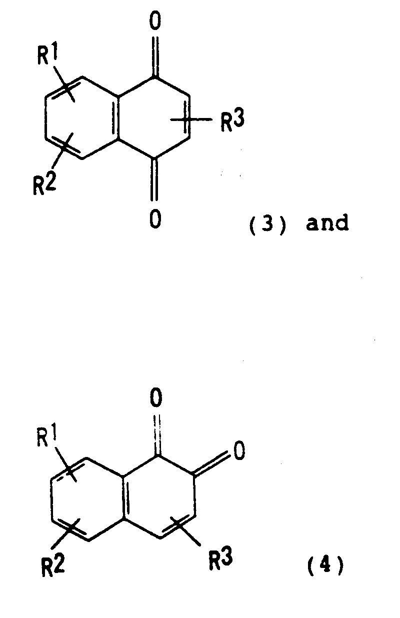 wherein in the formulae (3) and (4) R¹ and R² have the same meanings as defined above and R³ represents -H, -OH, -CH₃, -C1, -Br, -COCH₃, -OCH₃, COOH or -SO₃H.

2. A process as claimed in claim 1, wherein said component (B) comprises at least one compound selected from the group consisting of o-benzoquinone, p-benzoquinone, hydroxy-p-benzoquinone, duroquinone, lawsone, juglone, plumbagin, and α-naphthoquinone.

3. A process as claimed in claim 1 or 2, wherein the condensation product of the component (A) and the component (B) is obtained by condensing the component (A) and the component (B) in an organic solvent-based medium.

4. A process as claimed in any of claims 1 to 3, wherein in the production of the condensation product of the component (A) and the component (B) the component (B) is used in an amount of 0.01 to 15 parts by weight per part by weight of the component (A).

5. A process as claimed in any of claims 1 to 4, wherein the concentration of the condensation product of the component (A) and the component (B) is 0.001 to 15% by weight.

6. A process as claimed in any of claims 1 to 5, wherein the polymerization is carried out by suspension polymerization, emulsion polymerization, solution polymerization, bulk polymerization, or gas phase polymerization.

7. A process as claimed in any of claims 1 to 6, wherein said monomer is selected from the group consisting of vinyl esters; vinyl halides, vinylidene halides; acrylic acid and methacrylic acid and their esters and salts; diene monomers; styrene; acrylonitrile; α-methylstyrene; and vinyl ethers.

## Patentansprüche

1. Verfahren zur Herstellung eines Polymers durch Polymerisation eines Monomers mit einer ethylenisch ungesättigten Doppelbindung in einem Polymerisationsgefäß, welches die Etappe der Durchführung der Polymerisation in einem Polymerisationsgefäß beinhaltet das mit einem Überzugsfilm an der Innenwandfläche versehen ist, der durch Auftragen einer Überzugsflüssigkeit auf die Innenwandfläche und durch deren anschließendes Trocknen gebildet wurde, wobei die Überzugsflüssigkeit eine wäßrige basische Lösung mit einem pH-Wert von 8,0 bis 13,0 beinhaltet, welche als Lösungsmittel Wasser oder ein gemischtes Lösungsmittel aus Wasser und einem organischen Lösungsmittel in einer Menge von 30 Gew.-% oder weniger enthält, mit Wasser mischbar ist und ein Kondensationsprodukt enthält aus
(A) wenigstens einer aliphatischen Diaminverbindung gewählt aus der Gruppe bestehend aus Methylendiamin, Ethylendiamin, Trimethylendiamin, 2,3-Diaminobutan und 2,4-Diaminopentan, mit
(B) wenigstens einer Chinonverbindung gewählt aus der Gruppe bestehend aus durch folgende Formeln (1) bis (4) dargestellten Verbindungen : 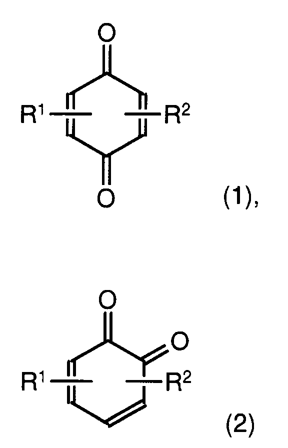 worin in den Formeln (1) und (2) R¹ -H, -NH₂, -Cl, -Br, -OH, -NO₂, -COCH₃, -OCH₃, -N(CH₃)₂ oder eine Alkylgruppe mit 1 bis 3 Kohlenstoffatomen bedeutet, und R² -H, -NH₂, -OH, -CH₃, -COOH oder -SO₃H bedeutet, 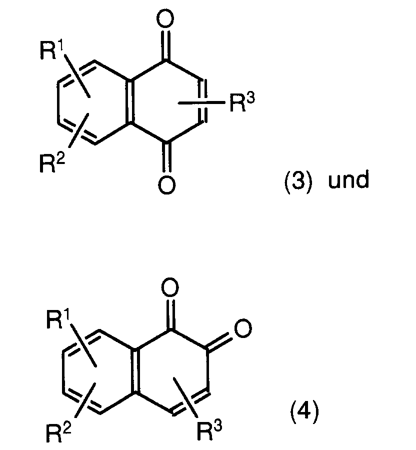 worin in den Formeln (3) und (4) R¹ und R² die gleichen oben angegebenen Bedeutungen haben und R³ -H, -OH, -CH₃, -Cl, -Br, -COCH₃, -OCH₃, -COOH oder -SO₃H bedeutet.

2. Verfahren nach Anspruch 1, worin die Komponente (B) wenigstens eine Verbindung gewählt aus der Gruppe bestehend aus o-Benzochinon, p-Benzochinon, Hydroxy-p-benzochinon, Durochinon, Lawson, Juglon, Plumbagin und α-Naphtochinon enthält.

3. Verfahren nach Anspruch 1 oder 2, worin das Kondensationsprodukt der Komponente (A) und der Komponente (B) durch Kondensation der Komponente (A) und der Komponente (B) in einem Medium auf einer Basis aus organischem Lösungsmittel erhalten wird.

4. Verfahren nach einem der Ansprüche 1 bis 3, worin in der Herstellung des Kondensationsprodukts der Komponente (A) und der Komponente (B), die Komponente (B) in einer Menge von 0,01 bis 15 Gew.-Teilen pro Gew.-Teil der Komponente (A) verwendet wird.

5. Verfahren nach einem der Ansprüche 1 bis 4, worin die Konzentration des Kondensationsprodukts der Komponente (A) und der Komponente (B) 0,001 bis 15 Gew.-% beträgt.

6. Verfahren nach einem der Ansprüche 1 bis 5, worin die Polymerisation durch Suspensionspolymerisation, durch Emulsionspolymerisation, durch Lösungspolymerisation, durch Massepolymerisation oder durch Gasphasenpolymerisation durchgeführt wird.

7. Verfahren nach einem der Ansprüche 1 bis 6, worin das Monomer aus der Gruppe gewählt wird bestehend aus Vinylestern; Vinylhalogeniden, Vinylidenhalogeniden, Acrylsäure und Methacrylsäure und deren Ester und Salze; Dienmonomeren; Styrol; Acrylnitril; α-Methylstyrol und Vinylethern.

## Revendications

1. Procédé de production d'un polymère par polymérisation d'un monomère ayant une double liaison à insaturation éthylénique dans une cuve de polymérisation, ledit procédé comprenant l'étape de réalisation de la polymérisation dans une cuve de polymérisation ayant, sur la surface de la paroi interne, un film de revêtement qui a été formé en appliquant un liquide de revêtement à ladite surface de paroi interne et en le séchant ensuite, ledit liquide de revêtement comprenant une solution alcaline aqueuse ayant un pH de 8,0 à 13,0 contenant, à titre de solvant, de l'eau ou un solvant mixte d'eau et d'un solvant organique en quantité de 30 % en poids ou moins, miscible à l'eau et contenant un produit de condensation:
(A) d'au moins un composé de diamine aliphatique choisi parmi le groupe comprenant la méthylènediamine, l'éthylènediamine, la triméthylènediamine, le 2,3-diaminobutane et le 2,4-diaminopentane, avec
(B) au moins un composé de quinone choisi parmi le groupe comprenant des composés représentés par les formules (1) à ( 4) suivantes : 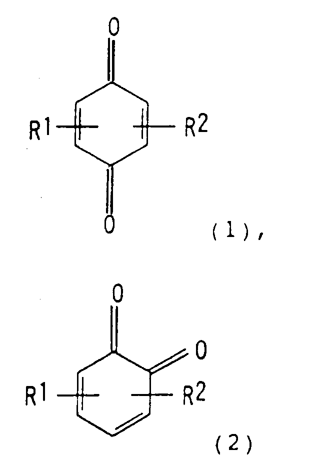 où dans les formules (1) et (2) R¹ représente -H, -NH₂, - Cl, -Br, -OH, -NO₂, -COCH₃, -OCH₃, -N(CH₃)₂ ou un groupe alkyle ayant 1 à 3 atomes de carbone, et R² représente - H, -NH₂, -OH, -CH₃, -COOH ou -SO₃H, 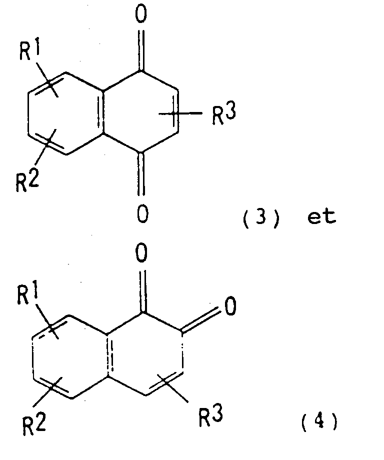 où dans les formules (3) et (4) R¹ et R² ont les mêmes signfications que celles définies ci-dessus, et R³ représente -H, -OH, -CH₃, -Cl, -Br, -COCH₃, -OCH₃, -COOH ou SO₃H.

2. Procédé selon la revendication 1, dans lequel ledit composant (B) comprend au moins un composé choisi parmi le groupe comprenant l'o-benzoquinone, la p-benzoquinone, l'hydroxy-p-benzoquinone, la duroquinone, la lawsone, la juglone, la plombagine et l'alphanaphtoquinone.

3. Procédé selon la revendication 1 ou 2, dans lequel le produit de condensation du composant (A) et du composant (B) est obtenu en condensant le composant (A) et le composant (B) dans un milieu à base de solvant organique.

4. Procédé selon l'une quelconque des revendications 1 à 3, dans lequel, dans la production du produit de condensation du composant (A) et du composant (B), le composant (B) est utilisé en quantité of 0,01 à 15 parties en poids par partie en poids du composant (A).

5. Procédé selon l'une quelconque des revendications 1 à 4, dans lequel la concentration du produit de condensation du composant (A) et du composant (B) est de 0,001 à 15 % en poids.

6. Procédé selon l'une quelconque des revendications 1 à 5, dans lequel la polymérisation est effectuée par polymérisation en suspension, polymérisation en émulsion, polymérisation en solution, polymérisation en masse ou polymérisation en phase gazeuse.

7. Procédé selon l'une quelconque des revendications 1 à 6, dans lequel ledit monomère est choisi parmi le groupe comprenant les esters vinyliques; les halogénures de vinyle; les halogénures de vinylidène; l'acide acrylique et l'acide méthacrylique, leurs esters et leurs sels; les monomères de diènes; le styrène; l'acrylonitrile; l'alpha-méthylstyrène; et les éthers vinyliques.
